# EUROPEAN PATENT APPLICATION

(11) **EP 4 350 424 A1**
(43) Date of publication of application: **10.04.2024**
(21) Application number: 21943968.4
(22) Date of filing: 04.06.2021
(51) Int. Cl.: G02C 5/22, G02C 5/14

(54) **ELEMENT FOR JOINING THE FRONT PORTION OF SPECTACLES TO SIDEPIECES FOR SECURING TO THE HEAD OF A USER**

(71) Applicant: Pauvazal, S.L., 28223 Pozuelo de Alarcón - Madrid (ES)
(72) Inventor: PAULET VAZQUEZ, Alberto, 28223 Madrid (ES)
(74) Representative: Falcon Morales, Alejandro
(86) International application number: PCT/ES2021/070408
(87) International publication number: WO 2022/254053

(57) **Abstract**

Element (1) for joining the front portion of spectacles to sidepieces that has a core (2) made of a thermoplastic elastomer of vegetable origin and a covering (3) of thermoplastic rubber, wherein the element has two flat end faces (4, 5) which, with the element (1) in a state of rest, form between them an angle defined by the range between 50° and 80°, where, the geometry of the element is such that, starting from the first extreme face (4), the element has a first side with a first curved portion (8) with a first radius, a second curved portion (9) a first flat portion (10) perpendicular to the second end face (5); and a second side which has a third curved portion (11) with a second radius and a second flat portion (12) up to the first end face (5).

## Description

### Subject matter of the invention

The present invention relates to an element for joining the front portion of spectacles to sidepieces for securing to the head of a user, which offers maximum flexibility and strength, eliminating the weak point of most optical frames known in the state of the art.

### Technical problem to be solved and background of the invention

At present, the frames and sidepieces, or any element that secures the frame to the user's head, are connected by means of joints that are usually hinged, which is often a weak point where spectacles break.

There are sidepieces with spring hinge mechanisms that help to keep the sidepieces in the open or closed position.

In order to avoid tension in this point, there are state-of-the-art spectacles with flexible bridges which, by making the bridge more flexible, minimize the tension on the hinges, which are the weakest point of the frame.

Spectacles made from a single piece of silicone are also well known for being lightweight and malleable.

Several documents are known that describe different joints between a frame and sidepieces, such as the one described in document ES0094530U where the main part of the hinge is made up of a "U" piece, such that on each side of its base there is a lobular projection with a central through hole, while its flexible arms have a hook-shaped external projection at their end, with a beveled external side.

Document ES0182629 U is also known, which describes a joint between spectacles' sidepieces and frame that has recesses in the external sectors of each eye frame, in which the perforated terminals of bifurcated branches of the sidepieces are attached to the frames by means of screws located in the holes drilled in the frame, perpendicular to the grooves, which allows the articulated connection of these associated elements.

However, none of the documents cited relates to a device for attaching a spectacles frame to sidepieces that is easily detachable by the user so that it can be exchanged for other headgear systems such as, for example, a headband and that also achieves a pantoscopic angle adjustment guaranteeing perfect vision through prescription lenses.

### Description of the invention

The subject matter of the present invention concerns an element for joining the front portion of spectacles to sidepieces for securing to the head of a user, with a core of a thermoplastic elastomer of vegetable origin made up of a regular linear chain of flexible polyether and rigid polyamide segments and a thermoplastic rubber coating.

The element that is the subject matter of the invention has a first end face and a second end face which, with the element in a state of rest, form between them around 50° and 80°, such that starting from the first end face, a first side of the element has a first curved portion with a first radius that provides a concave section to the element, up to a second curved portion, of opposite curvature to the first curved portion that connects with a first flat portion that is perpendicular to the second end face; and a second side of the element, opposite to the first side, has a third curved portion with a second radius that provides a concave section to the element, then a second flat portion that reaches the first end face perpendicularly.

In the element for joining the front portion of spectacles to sidepieces for securing to the head of a user, the element that is the subject matter of the invention has a first radius with a value between 0.5 mm and 1.8 mm.

In the element for joining the front portion of spectacles to sidepieces for securing to the head of a user, the element that is the subject matter of the invention has a second radius with a value between 1.5 mm and 3.2 mm.

In the element for joining the front portion of spectacles to sidepieces for securing to the head of a user, the element that is the subject matter of the invention has a first end face with a means of connection.

In the element for joining the front portion of spectacles to sidepieces for securing to the head of a user, the element that is the subject matter of the invention has a second end face with a means of connection.

In the element for joining the front portion of spectacles to sidepieces for securing to the head of a user, the element that is the subject matter of the invention has a means of connection that is a projection with a T-shaped section.

In the element for joining the front portion of spectacles to sidepieces for securing to the head of a user, the element that is the subject matter of the invention has means of connection that are rectangular rings.

### Description of the drawings

To complete the description, a set of drawings in which the following has been represented is attached to this descriptive report, as an integral element of the same:

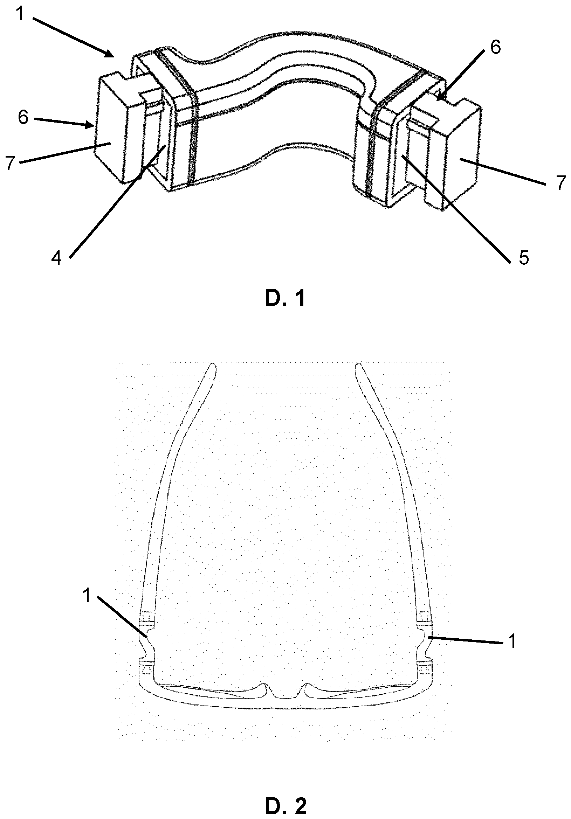

Figure 1 shows a perspective view of the element for joining the front portion of spectacles to sidepieces for securing to the head of a user that is the subject matter of the invention.
Figure 2 shows a plan view of a pair of spectacles with the sidepieces attached to the front portion by means of an element that is the subject matter of the invention, with said sidepieces in the open position.

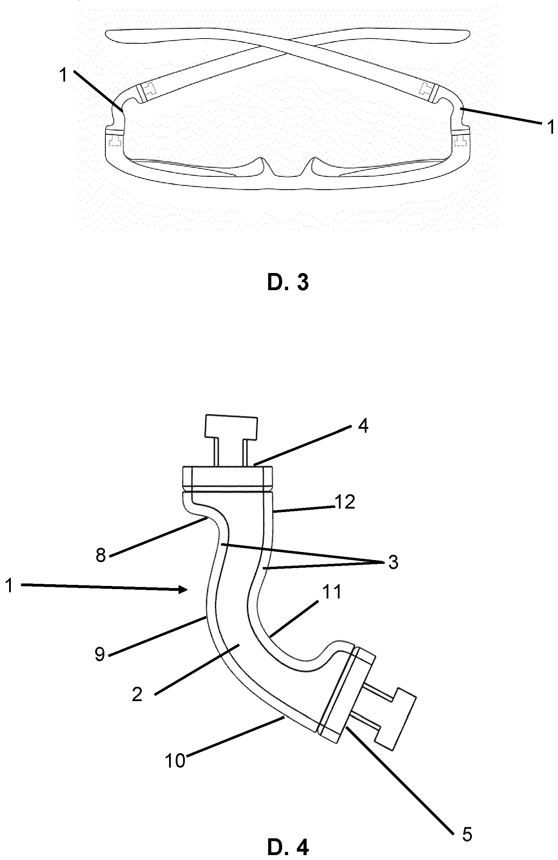

Figure 3 shows a plan view of the spectacles from Figure 2 in the closed position.
Figure 4 shows a plan view of the element that is the subject matter of the invention from Figure 1.

### Preferred embodiment of the invention

As already indicated, and as can be seen in the figures, the subject matter of the present invention is an element for joining the front portion of spectacles to sidepieces which performs the function of a hinge for bending the sidepieces of the spectacles with respect to the front portion and adjusting the position of the front portion with respect to the sidepieces of the spectacles.

The element that is the subject matter of the invention provides such flexibility and strength that it allows a rotation of almost 360° and returns to the initial position, so as to increase the useful life of the element avoiding breakage due to stress originated by the repetition of the opening-closing maneuver of the sidepieces.

The connecting element (1) that is the subject matter of the invention has a core (2) of thermoplastic elastomer of vegetable origin made up of a regular linear chain of flexible polyether and rigid polyamide segments and a coating (3) of thermoplastic rubber, such that the core (2) provides elasticity and strength to the element and the coating (3) increases the robustness of the element (1). The core (2) and the coating (3) are fused by a double injection process.

The thermoplastic rubber is a material with a very high compressive strength, which contributes to extending the useful life of the element (1) since the element (1) undergoes multiple compressions during the life of said element.

The material of the core (2) is an elastomer with the distinctive characteristic that it is mainly made up of linear polymers, which provides the technical effect that at room temperature and after being subjected to a deformation stress, it recovers the initial shape after an applied load ceases to be applied, i.e. it provides elasticity to the element (1) that is the subject matter of the invention.

The element (1) that is the subject matter of the invention has a geometry that allows a direct transmission of forces on the hinge-sidepiece assembly, allowing smooth opening of the sidepieces and ensuring that the grip on the side of the head provides an optimal fit and comfort when the spectacles are placed on the user.

The element (1) that is the subject matter of the invention has a geometry that is defined below and that, together with the combined work of the two materials that make up the element, provides it with the characteristics already described.

The element (1) that is the subject matter of the invention has a first end face (4) and a second end face (5) which, with the element (1) in a state of rest, form between them an angle defined between 50° and 80° such that end face (4, 5) has a means of connection (6) either to the front portion or to the sidepiece. The means of connection of the element to the front portion (6) of the spectacles is a projection with a T-shaped section (7), complementary to a housing located on the front portion of the spectacles. This configuration of the means of connection is repeated if the element (1) is to be connected to sidepieces.

Next, the geometry of the element (1) will be described, working along the element (1), so that starting from the first end face (4), a first side of the element has a first curved portion (8) with a first radius that provides a concave section to the element (1), up to a second curved portion (9), of opposite curvature to the first curved portion (8) that connects with a first flat portion (10) that is perpendicular to the second end face (5), so that the first side of the element comprises two curved portions (8, 9) with opposite curvatures and a first flat portion (10). A second side of the element, opposite to the first side, has a third curved portion (11) with a second radius providing a concave section to the element (1), then a second flat portion (12) reaching the first end face (5) perpendicular to it. It should be noted that the second curved portion (9) of the first side of the element (1) corresponds to the third curved portion (11) of the second side of the element, therefore, the second radius affects the curvature of both the third curved portion (11) and the second curved portion (9) of the element (1).

The first radius, which may have a value between 0.5 mm and 1.8 mm, provides flexibility to the element (1) so that the sidepieces can be bent in the opposite direction to the usual and the second radius, which may have a value between 1.5 mm and 3.2 mm, ensures adequate grip on the side of the head so as to provide optimum fit and comfort when the spectacles are placed on the user.

The element (1) that is the subject of the invention has a length measured as the distance in the perpendicular from the first end face (4) to the farthest point of the second end face (5) of between 15 mm and 17 mm.

Both the length of the element (1) and the angle between the two extreme flat faces (4, 5) of the element (1) in the rest state ensure that, when the sidepieces are opened, they suffer less stress and their alignment with the front portion is optimal, achieving a balance between aesthetics and functionality.

The angles of curvature and the radii of the element ensure that the stresses concentrated in the curved areas of the element (1) are not critical. The fact that a plastic element is subjected to a stress by bending it means that one side of the plastic element is subjected to compression and the opposite side is subjected to distention, therefore, the fibers that make up the plastic material are subjected to stresses that can lead to their wear and tear. In the element (1) that is the subject matter of the invention, both the first radius and the second radius provide a reduction in the stresses that the fibers of the plastic material have to withstand, achieving high strength and durability.

### Industrial application

The joint that is the subject matter of the invention is applicable in the optical industry.

The list of numerical references used in the figures is shown below:
1.- element,
2.- core,
3.- coating,
4.- first end face,
5.- second end face,
6.- means of connection,
7.- projection with a T-shaped section,
8.- first curved portion,
9.- second curved portion,
10.- first flat portion,
11.- third curved portion, and
12.- second flat portion.

## Claims

1. Element for joining the front portion of spectacles to sidepieces **characterized by** the fact that it has:
- a core (2) made of a thermoplastic elastomer of vegetable origin made up of a regular linear chain of flexible polyether and rigid polyamide segments, and
- a coating (3) of thermoplastic rubber,
where the element has a first end face (4) and a second end face (5) which, with the element (1) in a state of rest, form between them an angle defined within the range of 50° and 80°, such that starting from the first end face (4), the element has a first side of the element with a first curved portion (8) with a first radius that provides a concave section to the element (1), up to a second curved portion (9), of opposite curvature to the first curved portion (8) that connects with a first flat portion (10) that is perpendicular to the second end face (5); and a second side of the element, opposite to the first side, has a third curved portion (11) with a second radius that provides a concave section to the element (1), then a second flat portion (12) that reaches the first end face (5) perpendicularly.

2. Element for joining the front portion of spectacles to sidepieces for securing to the head of a user in accordance with claim 1, **characterized by** the fact that the first radius has a value between 0.5 mm and 1.8 mm.

3. Element for joining the front portion of spectacles to sidepieces for securing to the head of a user in accordance with any of the claims 1 to 2, **characterized by** the fact that the second radius has a value between 1.5 mm and 3.2 mm.

4. Element for joining the front portion of spectacles to sidepieces for securing to the head of a user in accordance with any of the claims 1 to 3, **characterized by** the fact that the first end face (4) has a means of connection (6).

5. Element for joining the front portion of spectacles to sidepieces for securing to the head of a user in accordance with any of the claims 1 to 3, **characterized by** the fact that the second end face (5) has a means of connection (6).

6. Element for joining the front portion of spectacles to sidepieces for securing to the head of a user in accordance with any of the claims 4 or 5, **characterized by** the fact that the means of connection (6) is a projection with a T-shaped section (7).

7. Element for joining the front portion of spectacles to sidepieces for securing to the head of a user in accordance with any of the claims 4 to 6, **characterized by** the fact that the means of connection (6) has a rectangular ring.
